# EUROPÄISCHE PATENTSCHRIFT

(11) **EP 1 926 640 B1**
(45) Veröffentlichungstag und Bekanntmachung des Hinweises auf die Patenterteilung: **19.06.2019**
(21) Anmeldenummer: 06841255.0
(22) Anmeldetag: 02.08.2006
(51) Int. Cl.: B60R 21/01, B60R 21/013, B60R 21/015, B60R 21/0132

(54) **VERFAHREN UND VORRICHTUNG ZUR CRASHTYPERKENNUNG FÜR EIN FAHRZEUG**
METHOD AND APPARATUS FOR CRASH TYPE IDENTIFICATION FOR A VEHICLE
PROCEDE ET DISPOSITIF DE RECONNAISSANCE DU TYPE D'ACCIDENT POUR VEHICULE

(30) Priorität: 06.09.2005 DE 102005042198
(43) Veröffentlichungstag der Anmeldung: 04.06.2008
(73) Patentinhaber: ROBERT BOSCH GMBH, 70442 Stuttgart (DE)
(72) Erfinder: MINDNER, Klaus, 71634 Ludwigsburg (DE); MACK, Frank, 70376 Stuttgart (DE); KOLATSCHEK, Josef, 71263 Weil Der Stadt (DE); LANG, Gunther, 70569 Stuttgart (DE); BREUNINGER, Joerg, 71282 Hemmingen (DE)
(86) Internationale Anmeldenummer: PCT/EP2006/064981
(87) Internationale Veröffentlichungsnummer: WO 2007/051661

(56) Entgegenhaltungen:
- US-A- 6 167 335
- US-A1- 2001 043 011
- US-B1- 6 198 387

## Beschreibung

### Stand der Technik

Die Erfindung geht aus von einem Verfahren zur Crashtyperkennung für ein Fahrzeug nach der Gattung des unabhängigen Patentanspruchs 1 und von einer zugehörigen Vorrichtung nach der Gattung des unabhängigen Patentanspruchs 11.

Seit der Einführung der Airbags wurden die Rückhaltesysteme für den Insassenschutz kontinuierlich weiterentwickelt. Hierzu zählen neben dem Beifahrerairbag, Seiten- und Kopfairbags auch Knieairbags und andere Rückhaltemittel. Die eingesetzten Auswerteverfahren, welche Auslöseentscheidungen zur Aktivierung der Rückhaltemittel treffen, basieren in der Regel auf Beschleunigungssignalen und/oder deren Integralen.

Zur korrekten und exakten Ansteuerung der Rückhaltemittel sind in den letzten Jahren die Anforderungen an die Unterscheidungsfähigkeit und Entscheidungszuverlässigkeit der Datenauswerteverfahren stark gestiegen. Um diesen gestiegenen Anforderungen gerecht zu werden, können im Vorbau des Fahrzeuges Beschleunigungssensoren als so genannte Upfrontsensoren verbaut werden.

So werden beispielsweise in der Patenschrift DE 101 34 331 C1 ein Verfahren und eine Vorrichtung zur Auslösung von passiven Sicherheitssystemen beschrieben. Das beschriebene Verfahren ermöglicht eine Erkennung und Unterscheidung von Crashschwere und Crashtyp. Zudem wird aus den von Sensoren erfassten Beschleunigungssignalen und deren einfachen Integralen bzw. aus den Differenzen der einfachen Integrale und der Summe der einfachen Integrale ein Überdeckungsgrad eines auf das Fahrzeug auftreffenden Objektes berechnet.

In der Offenlegungsschrift DE 100 44 918A1wird ein Verfahren zum Schutz der Insassen eines Kraftfahrzeugs bei einem Unfall beschrieben, welches Signale von wenigstens zwei Beschleunigungssensoren auswertet und miteinander verknüpft, um einen Schätzwert über den Auftreffpunkt eines Hindernisses auf die Fahrzeugstruktur zu ermitteln.

Aus US 6,167,335 ist es bekannt, verarbeitete Beschleunigungssignale eines rechten und eines linken Beschleunigungssensors im Fahrzeug mit den Signalen eines zentral angeordneten Beschleunigungssensors zu verknüpfen und dieses verknüpfte Signal weiterzuverarbeiten und einer jeweiligen Schwellwertvergleichsbildung zu unterziehen. Die Ausgangssignale der Schwellwertvergleiche werden logisch verknüpft und mit einem Timer gehalten. Weiterhin werden die Signale des rechten und linken Beschleunigungssensors miteinander verknüpft und einem weiteren Schwellwertvergleich unterzogen. Ein weiterer Timer hält das Ausgangssignal dieses Schwellwertvergleichs, um die Ausgangssignale der beiden Timer weiterhin logisch zu verknüpfen, um ein Ansteuersignal für die Personenschutzmittel zu bilden.

Das erfindungsgemäße Verfahren zur Crashtyperkennung für ein Fahrzeug mit den Merkmalen des unabhängigen Patentanspruchs 1 hat demgegenüber den Vorteil, dass nach einem Aufprall zur Verbesserung der Stabilität und zur Erhöhung der Zuverlässigkeit, mindestens eine erste Verknüpfung von Sensordaten, welche von der linken Fahrzeugseite und von der rechten Fahrzeugseite erfasst werden, dahingehend überprüft wird, ob mindestens ein vorgegebenes Stabilitätskriterium erfüllt wird. Ergibt die Überprüfung der ersten Verknüpfung, dass das mindestens eine Stabilitätskriterium erfüllt wird, dann wird mindestens eine zweite Verknüpfung der erfassten Sensordaten mit einem vorgegebenen Schwellwert verglichen. Es wird ein erstes Kriterium für ein asymmetrisches Aufprallflagsignal erkannt, wenn die zweite Verknüpfung der erfassten Sensordaten den vorgegebenen Schwellwert überschreitet und/oder unterschreitet. Durch die Vorgabe des Stabilitätskriteriums wird in vorteilhafter Weise der optimale Auswertezeitpunkt für die zweite Verknüpfung der erfassten Sensordaten bestimmt, d.h. die Sensordaten werden erst dann ausgewertet, wenn die erste berechnete Verknüpfung der Sensordaten eine vorgegebene Zuverlässigkeit erreicht hat. Die Zuverlässigkeit kann beispielsweise über eine applizierbare Schwelle gesteuert werden. Für das erfindungsgemäße Verfahren werden in der Nähe der Fahrzeugfront während eines Unfalls jeweils Sensordaten links und rechts von einer zentralen Fahrzeuglängsachse erfasst. Die Sensordaten können beispielsweise symmetrisch zur Fahrzeuglängsachse erfasst werden.

Das erfindungsgemäße Verfahren zur Crashtyperkennung ermöglicht in vorteilhafter Weise eine Unterscheidung von Front-Unfällen mit einem symmetrischen Aufprallmuster von Frontunfällen mit einem asymmetrischen Aufprallmuster. Basierend auf diesen Informationen kann die Ansteuerung der Rückhaltemittel und damit die Insassenschutzwirkung besser an den Crashtyp bzw. die Crashschwere angepasst werden. Unfälle mit einem symmetrischen Aufprallmuster umfassen beispielsweise Unfälle mit einer Barrierenüberdeckung von 100% oder zentral erfolgte Pfahlcrashs. Unsymmetrische Unfallmuster entstehen beispielsweise durch Winkelcrashs und Offsetcrashs mit einer Barriereüberdeckung von weniger als 100%.

Die zugehörige erfindungsgemäße Vorrichtung zur Crashtyperkennung für ein Fahrzeug mit den Merkmalen des unabhängigen Patentanspruchs 11 umfasst mindestens eine in Fahrrichtung links von der Fahrzeuglängsachse angeordnete Sensoreinheit, mindestens eine in Fahrrichtung rechts von der Fahrzeuglängsachse angeordnete Sensoreinheit, welche Sensordaten erfassen, und eine Auswerte- und Steuereinheit, welche die erfassten Sensordaten auswertet. Erfindungsgemäß verknüpft die Auswerte- und Steuereinheit nach einem Aufprall die erfassten Sensordaten miteinander, überprüft mindestes eine erste Verknüpfung der erfassten Sensordaten auf Erfüllen mindestens eines Stabilitätskriteriums und vergleicht nach dem Erfüllen des Stabilitätskriteriums mindestens eine zweite Verknüpfung der erfassten Sensordaten mit einem vorgegebenen Schwellwert. Die Auswerte- und Steuereinheit erkennt das erste Kriterium für ein asymmetrisches Aufprallflagsignal, wenn die zweite Verknüpfung der erfassten Sensordaten den vorgegebenen Schwellwert überschreitet und/oder unterschreitet. Die beiden Sensoreinheiten können beispielsweise im vorderen Bereich des linken und rechten Längsträgers, jeweils an der linken bzw. rechten A-, B- oder C-Säule oder am linken oder rechten Schweller angeordnet sein.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Crashtyperkennung für ein Fahrzeug und der im unabhängigen Patentanspruch 11 angegebenen Vorrichtung zur Crashtyperkennung für ein Fahrzeug möglich.

Besonders vorteilhaft ist, dass die erfassten Sensordaten vor einem Verknüpfungsvorgang aufbereitet werden, vorzugsweise durch eine einmalige oder zweimalige Integration. Bei den erfassten Sensordaten handelt es sich beispielsweise um Beschleunigungsdaten, welche durch eine einmalige Integration in Geschwindigkeitsdaten oder durch eine zweimalige Integration in physikalische Wegdaten umgewandelt werden können. Durch eine entsprechende Summenbildung und/oder Differenzbildung können aus den erfassten Beschleunigungsdaten und/oder aus den durch Aufbereitung der Beschleunigungsdaten gewonnenen Geschwindigkeitsdaten und/oder Wegdaten Beschleunigungsabbaudaten und/oder Geschwindigkeitsabbaudaten und/oder Deformationswegdaten berechnet werden. Im Sinne der Erfindung umfasst der verwendete Begriff Sensordaten die erfassten und/oder die aufbereiteten Sensordaten.

Für die erste Verknüpfung wird beispielsweise die Summe der über mindestens zwei Sensoreinheiten erfassten oder aufbereiteten Sensordaten berechnet. Somit wird die zweite Verknüpfung der erfassten oder aufbereiteten Sensordaten erst dann ausgewertet, wenn der Gesamtwert der erfassten oder aufbereiteten Sensordaten einen vorgebbaren Schwellwert überschreitet und/oder unterschreitet und damit eine vorgegebene Zuverlässigkeit erreicht hat.

Für die zweite Verknüpfung werden beispielsweise die Differenz und/oder der Betrag der Differenz der über mindestens zwei Sensoreinheiten erfassten oder aufbereiteten Sensordaten berechnet.

In Ausgestaltung des erfindungsgemäßen Verfahrens wird die zweite Verknüpfung der erfassten oder aufbereiteten Sensordaten vor dem Vergleich mit dem vorgegebenen Schwellwert auf die erste Verknüpfung der erfassten oder aufbereiteten Sensordaten normiert. So wird beispielsweise die Differenz der erfassten oder aufbereiteten Sensordaten auf den Gesamtwert der erfassten Sensordaten normiert. Durch die Normierung wirken sich kleine Wertunterschiede, welche aufgrund von statistischen Abweichungen auch bei Unfällen mit einem symmetrischen Aufprallmuster entstehen, in vorteilhafter Weise nicht negativ auf das Auswerteergebnis aus, da Abweichungen nur entsprechend des Gesamtwertes der erfassten Sensordaten gewichtet werden. Zusätzlich ist die Auswertung durch die Normierung in vorteilhafter Weise unabhängig von der Crashschwere, d.h. von der Geschwindigkeit, mit welcher der Unfall stattfindet, da die Crashschwere bei gleichem Offset, die Amplitude der erfassten Beschleunigungssignale in etwa mit demselben Faktor beeinflusst. Dies beeinflusst auch die Differenz der von den mindestens zwei Sensoreinheiten erfassten Sensordaten. Dieser Effekt wird durch die Normierung kompensiert.

In weiterer Ausgestaltung des erfindungsgemäßen Verfahren wird ein zweites Kriterium für das asymmetrische Aufprallflagsignal erkannt, wenn die zweite Verknüpfung der erfassten oder aufbereiteten Sensordaten innerhalb einer vorgebbaren Zeitspanne einen zweiten vorgegebenen Schwellwert überschreitet und/oder unterschreitet und eine zentral erfasste Geschwindigkeitsabnahme einen vorgegebenen dritten Schwellwert unterschreitet und/oder überschreitet. Dies steigert in vorteilhafter Weise die Zuverlässigkeit der Crashtyperkennung, da Unfälle mit einem nicht symmetrischen Aufprallmuster typischerweise ein langsameres Anwachsen der abgebauten zentral im Fahrzeug erfassten Geschwindigkeit zur Folge haben. Wächst das Geschwindigkeitsabbausignal jedoch schnell an, dann kann mit einer größeren Wahrscheinlichkeit auf einen Unfall mit einem symmetrischen Aufprallmuster geschlossen werden. Zudem kann es erwünscht sein, Unfälle mit einem asymmetrischen Aufprallmuster bei einer geringen Unfallgeschwindigkeit als Unfall mit einem symmetrischen Aufprallmuster zu klassifizieren, um nicht eine in diesen Fällen unnötige Empfindlichkeitssteigerung des Auslösealgorithmus hervorzurufen. Dies gilt beispielsweise für Unfälle mit einer Charakteristik, welche einem langsamen Crash entspricht, beispielsweise einem Aufprall mit einer Geschwindigkeit von 15km/h. Ein Maß für solche Unfälle ist eine geringe Höhe der nicht normierten Wertdifferenz der erfassten Beschleunigungssignale, welche mit einem einstellbaren Schwellwert verglichen werden.

Das asymmetrische Aufprallflagsignal kann beispielsweise aktiviert werden, wenn das erste Kriterium und/oder das zweite Kriterium erfüllt sind. Ansonsten wird das asymmetrische Aufprallflagsignal deaktiviert.

In weiterer Ausgestaltung des erfindungsgemäßen Verfahrens kann nach dem Aktivieren des asymmetrischen Aufprallflagsignals die Fahrzeugseite, auf welcher der unsymmetrische Aufprall erfolgt ist, dadurch bestimmt werden, dass das Vorzeichen der zweiten Verknüpfung der erfassten oder aufbereiteten Sensordaten ausgewertet wird. Zudem kann bei der Auswertung der erfassten Sensordaten ein Korrekturfaktor berechnet und berücksichtigt werden, um baulich bedingte asymmetrische Fahrzeugstrukturen auszugleichen.

Zur Abschätzung der Crashschwere kann beispielsweise überprüft werden, ob das asymmetrische Aufprallflagsignal innerhalb einer vorgegebenen Zeitspanne aktiviert wird. Erfolgt die Offseterkennung in sehr kurzer Zeit, d.h. das Aktivieren des Aufprallflagsignals, dann kann auf einen besonders schweren Crash geschlossen werden und ein besonderes Flagsignal gesetzt werden. Wird das entsprechende Flagsignal von einem nachfolgenden Auswerteverfahren erkannt, dann kann über entsprechende Maßnahmen der Auslösealgorithmus in einen empfindlicheren Zustand versetzt werden.

In weiterer Ausgestaltung umfasst die erfindungsgemäße Vorrichtung eine zentral im Fahrzeug angeordnete Sensoreinheit, welche eine Geschwindigkeitsabnahme des Fahrzeugs erfasst, wobei die Auswerte- und Steuereinheit das zweite Kriterium für ein asymmetrisches Aufprallflagsignal erkennt, wenn die zweite Verknüpfung der erfassten oder aufbereiteten Sensordaten innerhalb einer vorgebbaren Zeitspanne einen zweiten vorgegebenen Schwellwert überschreitet und/oder unterschreitet und die zentral erfasste Geschwindigkeitsabnahme einen vorgegebenen dritten Schwellwert unterschreitet und/oder überschreitet.

Die Auswerte- und Steuereinheit aktiviert das asymmetrische Aufprallflagsignal, wenn das erste Kriterium und/oder das zweite Kriterium erfüllt sind. Ansonsten deaktiviert die Auswerte- und Steuereinheit das asymmetrische Aufprallflagsignal.

### Zeichnung

Ausführungsbeispiele der Erfindung sind in der Zeichnung dargestellt und werden in der nachfolgenden Beschreibung näher erläutert.

Es zeigen:
- Figur 1: ein schematisches Blockdiagramm einer Vorrichtung zur Crashtyperkennung für ein Fahrzeug,
- Figur 2: ein schematisches Blockdiagramm eines Vorbereitungsblocks aus Fig. 1,
- Figur 3: ein schematisches Blockdiagramm eines Stabilitätsblocks aus Fig. 1,
- Figur 4: ein schematisches Blockdiagramm eines ersten Entscheidungsblocks aus Fig. 1,
- Figur 5: ein schematisches Blockdiagramm eines zweiten Entscheidungsblocks aus Fig. 1, und
- Figur 6: ein schematisches Blockdiagramm eines Crashschwereblocks aus Fig. 1,

### Beschreibung

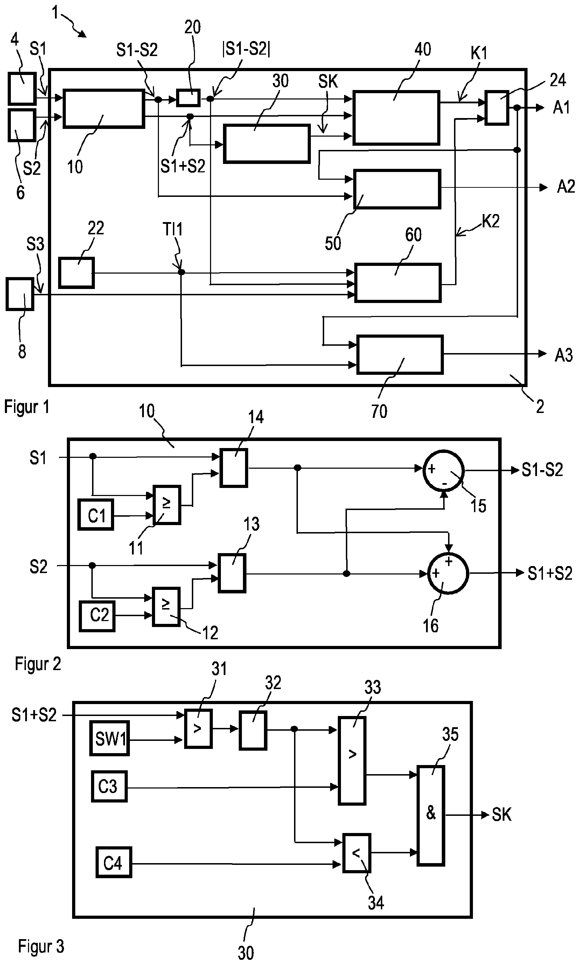

Wie aus Figur 1 ersichtlich ist, umfasst die Vorrichtung 1 zur Crashtyperkennung für ein Fahrzeug, eine in Fahrrichtung links von der Fahrzeuglängsachse angeordneten Sensoreinheit 4, eine in Fahrrichtung rechts von der Fahrzeuglängsachse angeordnete Sensoreinheit 6, eine zentral im Fahrzeug angeordnete Sensoreinheit 8, welche Sensordaten S1, S2, S3 erfassen, und eine Auswerte- und Steuereinheit 2, welche die erfassten Sensordaten S1, S2, S3 auswertet. Die erste und zweite Sensoreinheit 4, 6 sind beispielsweise symmetrisch zur Fahrzeuglängsachse im vorderen Bereich des linken bzw. rechten Längsträgers, jeweils an der linken und rechten A-, B- oder C-Säule oder am linken oder rechten Schweller des Fahrzeugs angeordnet.

Die Auswerte- und Steuereinheit 2 verknüpft nach einem Aufprall die von der linken Sensoreinheit 4 und der rechten Sensoreinheit 6 erfassten Sensordaten S1, S2 in einem Vorbereitungsblock 10 miteinander. Die von den Sensoreinheiten 4, 6, 8 erfassten Sensordaten S1, S2, S3 können vor einem Verknüpfungsvorgang oder einem Auswertevorgang aufbereitet werden, vorzugsweise durch eine einmalige oder zweimalige Integration der Sensordaten S1, S2, S3. Wie oben bereits ausgeführt ist, handelt es sich bei den erfassten Sensordaten beispielsweise um Beschleunigungsdaten, welche durch eine einmalige Integration in Geschwindigkeitsdaten und/oder durch eine zweimalige Integration in physikalische Wegdaten umgewandelt werden können. Durch eine entsprechende Summenbildung und/oder Differenzbildung können aus den erfassten Beschleunigungsdaten und/oder aus den durch Aufbereitung der Beschleunigungsdaten gewonnenen Geschwindigkeitsdaten und/oder Wegdaten Beschleunigungsabbaudaten und/oder Geschwindigkeitsabbaudaten und/oder Deformationswegdaten berechnet werden. Im Sinne der Erfindung umfasst der verwendete Begriff Sensordaten S1, S2, S3 die erfassten und/oder die aufbereiteten Sensordaten. Wie aus Figur 2 ersichtlich ist, berechnet der Vorbereitungsblock 10 für eine erste Verknüpfung S1+S2 mit einem ersten Addierer 16 die Summe der von der linken und rechten Sensoreinheit 4, 6 erfassten oder aufbereiteten Sensordaten S1, S2 und für eine zweite Verknüpfung S1-S2 mit einem zweiten Addierer 15 die Differenz der erfassten oder aufbereiteten Sensordaten S1, S2. Vor der Verknüpfung der erfassten oder aufbereiteten Sensordaten S1, S2 wird bei einer Verwendung des zweiten Integrals der Sensordaten S1, S2 durch eine Konstante C1, eine Vergleichseinheit 11 und ein Durchlassgatter 14 der Wertebereich des zweiten Integrals der ersten Sensordaten S1 auf Werte größer als die Konstante C1 eingeschränkt, wobei die Konstante C1 vorzugsweise auf den Wert Null gesetzt wird. Durch eine Konstante C2, eine Vergleichseinheit 12 und ein Durchlassgatter 13 wird der Wertebereich des zweiten Integrals der zweiten Sensordaten S2 auf Werte größer als die Konstante C2 eingeschränkt, wobei die Konstante C2 vorzugsweise ebenfalls auf den Wert Null gesetzt wird. Anschließend berechnet eine Betragsbildungseinheit 20 den Betrag |S1-S2| der zweiten Verknüpfung S1-S2 der erfassten oder aufbereiteten Sensordaten S1, S2.

In einem Stabilitätsblock 30 wird die erste Verknüpfung S1+S2 der erfassten Sensordaten S1, S2 auf Erfüllen eines Stabilitätskriteriums überprüft. Wie aus Figur 3 ersichtlich ist, vergleicht eine Vergleichseinheit 31 im Stabilitätsblock 30 die erste Verknüpfung S1+S2 mit einem einstellbaren Schwellwert SW1. Mit einem Stabilitätszähler 32, zwei Vergleichseinheiten 33, 34 und einem UND-Gatter 35 überprüft der Stabilitätsblock 30, ob der Schwellwert SW1 innerhalb eines einstellbaren Zeitintervalls überschritten wird. Das Zeitintervall wird über Konstanten C3 und C4 eingestellt, wobei die Konstante C3 einen Minimalwert repräsentiert und die Konstante C4 einen Maximalwert repräsentiert. Ist das Stabilitätskriterium erfüllt, d.h. die erste Verknüpfung S1+S2 überschreitet innerhalb des Zeitintervalls zwischen dem Zeitpunkt C3 und dem Zeitpunkt C4 den Schwellwert SW1, dann gibt der Stabilitätsblock 30 ein aktiviertes Stabilitätsflagsignal SK aus.

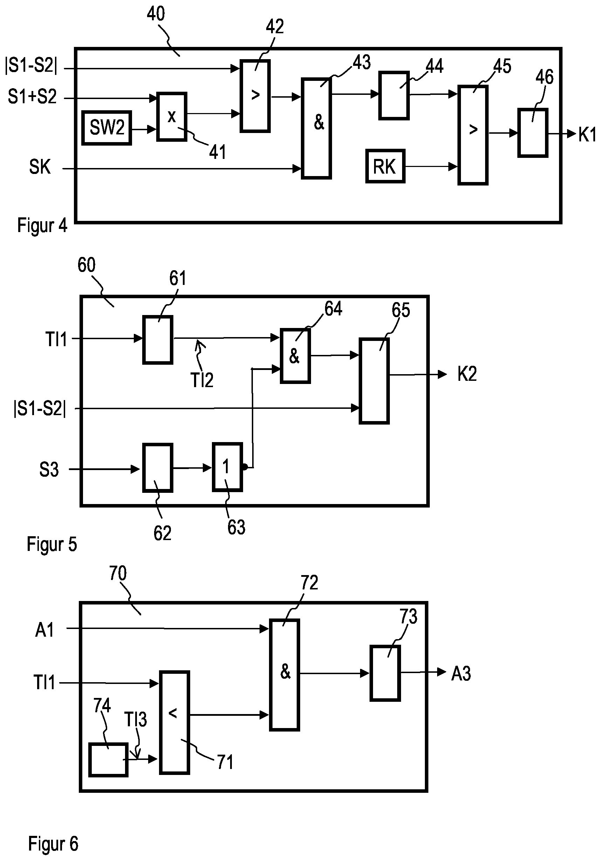

Ein erster Entscheidungsblock 40 normiert den Betrag |S1-S2| der zweiten Verknüpfung S1-S2 auf die erste Verknüpfung S1+S2, d.h. auf die Summe der erfassten Sensordaten S1, S2, und vergleicht den normierten Betrag (|S1-S2|)/(S1+S2) nach dem Erfüllen des Stabilitätskriteriums mit einem vorgegebenen Schwellwert SW2. Der erste Entscheidungsblock 40 wertet das Stabilitätsflagsignal SK aus, um das Erfüllen des Stabilitätskriteriums zu erkennen. Das bedeutet, dass der erste Entscheidungsblock folgenden Vergleich (|S1-S2|)/(S1+S2)>SW2 ausführt, wobei SW2 einen einstellbaren zweiten Schwellwert bezeichnet. Aus Gründen der einfacheren Implementierung wird, wie aus Figur 4 ersichtlich ist, für diesen Vergleichsvorgang zuerst die erste Verknüpfung S1+S2 durch eine Multiplikationseinheit 41 mit dem Schwellwert SW2 multipliziert. Anschließend wird durch eine Vergleichseinheit 42 überprüft, ob der Betrag |S1-S2| der zweiten Verknüpfung S1-S2 größer als das Produkt des zweiten Schwellwerts SW2 und der ersten Verknüpfung S1+S2 ist. Ein UND-Gatter 43 wird aktiviert, wenn das Stabilitätsflagsignal SK gesetzt ist und der normierte Betrag (|S1-S2|)/(S1+S2) der zweiten Verknüpfung S1-S2 größer als der zweite Schwellwert SW2 ist. Wie weiter aus Figur 4 ersichtlich ist, werden ein Zähler 44, eine Vergleichseinheit 45 und eine Robustheitskonstante RK verwendet um zu überprüfen, ob das UND-Gatter 43 für eine vorgebbare Zeitdauer aktiviert ist, welche durch die Robustheitskonstante RK vorgegeben wird. Ist der normierte Betrag (|S1-S2|)/(S1+S2) der zweiten Verknüpfung S1-S2 länger als die durch die Robustheitskonstante RK vorgegebene Zeitspanne größer als der zweite Schwellwert SW2, dann wird ein Halteglied 46 gesetzt und ein erstes Kriterium K1 für ein asymmetrisches Aufprallflagsignal A1 gesetzt und ausgegeben.

Ein zweiter Entscheidungsblock 60 aktiviert ein zweites Kriterium K2 für das asymmetrische Aufprallflagsignal A1, wenn der Betrag |S1-S2| der zweiten Verknüpfung S1-S2 der erfassten oder aufbereiteten Sensordaten S1, S2 innerhalb einer bestimmten einstellbaren Zeitspanne einen einstellbaren Schwellwert überschreitet und eine aus dem von der zentral im Fahrzeug angeordneten Sensoreinheit 8 erfassten Beschleunigungssignal S3 berechnete Geschwindigkeitsabnahme einen vorgegebenen Schwellwert unterschreitet. Wie aus Figur 5 ersichtlich ist, wird ein von einem Zeitgeber 22 vorgegebenes erstes Zeitintervall TI1 über ein einstellbares Zeitglied 61 variiert und ein gewünschtes Zeitintervall TI2 erzeugt. Das von der Sensoreinheit 8 erfasste Beschleunigungssignal S3 wird von einer Berechnungseinheit 62 und einem Inverter 63 in ein entsprechendes Geschwindigkeitsabnahmesignal umgewandelt. Ist die Geschwindigkeitsabnahme innerhalb des erzeugten Zeitintervalls TI2 kleiner als ein vorgegebener Schwellwert, dann wird ein UND-Gatter 64 aktiviert und eine Bestimmungseinheit 65 ermittelt, ob der Betrag |S1-S2| der zweiten Verknüpfung S1-S2 zusätzlich den einstellbaren Schwellwert überschreitet. Ist die zusätzliche Bedingung ebenfalls erfüllt, dann aktiviert die Bestimmungseinheit 65 das zweite Kriterium K2.

Die Auswerte- und Steuereinheit 2 erkennt einen Unfall mit einem asymmetrischen Aufprallmuster, wenn das erste Kriterium K1 und/oder das zweite Kriterium K2 gesetzt sind und aktiviert das asymmetrische Aufprallflagsignal A1. Im dargestellten Ausführungsbeispiel wird das erste Kriterium K1 über ein UND-Gatter 24 mit dem zweiten Kriterium K2 verknüpft, so dass das asymmetrische Aufprallflagsignal A1 aktiviert wird, wenn das erste und das zweite Kriterium K1, K2 erfüllt sind. Ansonsten ist das asymmetrische Aufprallflagsignal A1 deaktiviert. Alternativ kann über eine entsprechende Auswahl bzw. Vorgabe der Schwellwerte auch nur eines der beiden Kriterien verwendet werden. So können bei einer alternativen nicht dargestellten Ausführungsform die beiden Kriterien K1, K2 beispielsweise über ein ODER-Gatter oder ein Exklusiv-ODER-Gatter miteinander verknüpft werden.

Zusätzlich kann eine Aufprallseitebestimmungseinheit 50 nach dem Setzen des asymmetrischen Aufprallflagsignals A1, welches einen Unfall mit einem unsymmetrischen Aufprallmuster anzeigt, das Vorzeichen der zweiten Verknüpfung S1-S2 der erfassten oder aufbereiteten Sensordaten S1, S2 auswerten und die Fahrzeugseite bestimmen, auf welcher der Aufprall erfolgt ist. Entsprechend dem ermittelten Vorzeichen, kann das Aufprallseitenflagsignal A2 aktiviert oder deaktiviert werden.

Zur Abschätzung der Crashschwere kann überprüft werden, ob das asymmetrische Aufprallflagsignal A1 innerhalb einer vorgegebenen Zeitspanne TI3 erkannt wird. Wie aus Figur 6 ersichtlich ist wird mittels eines Zeitgebers 74, einer Vergleichseinheit 71 und einem UND-Gatter 72 bestimmt, ob die Offseterkennung innerhalb einer sehr kurzen Zeitspanne TI3 erfolgt ist. Ist dies der Fall, dann wird das UND-Gatter 72 aktiviert und über ein Halteglied 73 ein Flagsignal A3 gesetzt, welches eine besondere Crashschwere anzeigt. Wird das gesetzte Crashschwereflagsignal A3 von einem nachfolgenden Auslöseverfahren erkannt, dann kann über entsprechende Maßnahmen beispielsweise eine Auslöseschwelle in einen empfindlicheren Zustand versetzt werden.

Die beschriebenen Blöcke mit ihren unterschiedlichen Funktionen bilden jeweils in sich abgeschlossene Einheiten und können im Prinzip auch einzeln in einem anderen Kontext als die Offseterkennung eingesetzt werden. Beispielsweise kann mit Hilfe des Stabilitätsblocks auch der Stabilitätszeitpunkt für Auslösefunktionen und/oder Crashtypbestimmungsfunktionen und/oder andere Crashschwerebestimmungsfunktionen im Bereich der Rückhaltesystemansteuerung bestimmt werden.

Durch das erfindungsgemäße Verfahren und die erfindungsgemäße Vorrichtung wird in vorteilhafter Weise die während eines Unfalls aus erfassten Sensordaten berechnete physikalische Wegdifferenz ausgewertet, d.h. die Differenz der zweiten Integrale der erfassten Beschleunigungssignale wird ausgewertet. Die Sensordaten werden beispielsweise von zwei jeweils in der Nähe der Fahrzeugfront links und rechts von der zentralen Fahrzeuglängsachse angeordneten Beschleunigungssensoren erfasst, wobei die berechnete Wegdifferenz mit dem berechneten Gesamtweg der beiden Sensoreinheiten normiert wird. Durch die Normierung können sich kleine Wegunterschiede, welche aufgrund von statistischen Abweichungen auch bei Unfällen mit symmetrischen Aufprallmustern entstehen, nicht negativ auf das Auswerteergebnis auswirken. Zusätzlich ist das Auswerteergebnis durch die Normierung unabhängig von der Crashschwere. Zusätzlich kann bei der Auswertung der erfassten Sensordaten zum Ausgleich von baulich bedingten asymmetrischen Fahrzeugstrukturen ein Korrekturfaktor berechnet und berücksichtigt werden.

Darüber hinaus wird der optimale Auswertezeitpunkt für die berechnete und normierte Wegdifferenz über das zusätzliche Stabilitätskriterium bestimmt, welches auf dem berechneten Gesamtweg der beiden Sensoren basiert. Dadurch wird die Auswertung erst vorgenommen, wenn die berechnete und normierte Wegdifferenz eine vorgegebene Zuverlässigkeit erreicht hat.

Zusätzlich kann das zweite Kriterium zur Erkennung eines Unfalls mit einem asymmetrischen Aufprallmuster verwendet werden, welches einerseits aus der nicht normierten Wegdifferenz der beiden Sensoreinheiten besteht, andererseits aber auch die bis dahin erfolgte Höhe des Geschwindigkeitsabbaues berücksichtigt, welche über einen zentral im Fahrzeug angeordnete Beschleunigungssensoreinheit bestimmt wird. Das zusätzliche zweite Kriterium steigert die Zuverlässigkeit der Crashtyperkennung, da Unfälle mit einem asymmetrischen Aufprallmuster typischer Weise ein langsameres Anwachsen der abgebauten Geschwindigkeit am Ort der zentralen Sensoreinheit bewirken. Wächst das Geschwindigkeitsabbausignal schnell an, dann kann mit größerer Wahrscheinlichkeit auf einen Unfall mit einem symmetrischen Aufprallmuster als auf einen Unfall mit einem asymmetrisch Aufprallmuster geschlossen werden.

## Patentansprüche

1. Verfahren zur Crashtyperkennung für ein Fahrzeug, bei welchem über mindestens zwei Sensoreinheiten (4, 6) Sensordaten (S1, S2) von der linken Fahrzeugseite und von der rechten Fahrzeugseite erfasst und ausgewertet werden, wobei die nach einem Aufprall erfassten Sensordaten (S1, S2) miteinander verknüpft werden, **dadurch gekennzeichnet, dass** mindestes eine erste Verknüpfung (S1+S2) der erfassten Sensordaten (S1, S2) dahingehend überprüft wird, ob mindestens ein Stabilitätskriterium erfüllt wird, und mindestens eine zweite Verknüpfung (S1-S2, |S1-S2|) der erfassten Sensordaten (S1, S2) mit einem vorgegebenen Schwellwert (SW2) dann verglichen wird, wenn das mindestens eine Stabilitätskriterium erfüllt wird, wobei ein erstes Kriterium (K1) für ein asymmetrisches Aufprallflagsignal (A1) erkannt wird, wenn die zweite Verknüpfung (S1-S2, |S1-S2|) der erfassten Sensordaten (S1, S2) den vorgegebenen Schwellwert (SW2) überschreitet und/oder unterschreitet.

2. Verfahren nach Anspruch 1, **dadurch gekennzeichnet, dass** die erfassten Sensordaten (S1, S2) vor einem Verknüpfungsvorgang, vorzugsweise durch eine einmalige oder zweimalige Integration aufbereitet werden.

3. Verfahren nach Anspruch 1 oder 2, **dadurch gekennzeichnet, dass** für die erste Verknüpfung (S1+S2) die Summe der erfassten oder aufbereiteten Sensordaten (S1, S2) berechnet wird.

4. Verfahren nach einem der Ansprüche 1 bis 3, **dadurch gekennzeichnet, dass** für die zweite Verknüpfung (S1-S2, |S1-S2|) die Differenz und/oder der Betrag der Differenz der erfassten oder aufbereiteten Sensordaten (S1, S2) berechnet werden.

5. Verfahren nach Anspruch 4, **dadurch gekennzeichnet, dass** die zweite Verknüpfung (S1-S2, |S1-S2|) der erfassten oder aufbereiteten Sensordaten (S1, S2) vor dem Vergleich mit dem vorgegebenen Schwellwert (SW2) auf die erste Verknüpfung (S1+S2) der erfassten oder aufbereiteten Sensordaten (S1, S2) normiert wird.

6. Verfahren nach einem der Ansprüche 1 bis 5, **dadurch gekennzeichnet, dass** ein zweites Kriterium (K2) für das asymmetrische Aufprallflagsignal (A1) erkannt wird, wenn die zweite Verknüpfung (S1-S2, |S1-S2|) der erfassten oder aufbereiteten Sensordaten (S1, S2) innerhalb einer vorgebbaren Zeitspanne einen zweiten vorgegebenen Schwellwert überschreitet und/oder unterschreitet und eine zentral erfasste Geschwindigkeitsabnahme einen vorgegebenen dritten Schwellwert unterschreitet und/oder überschreitet.

7. Verfahren nach Anspruch 6, **dadurch gekennzeichnet, dass** das asymmetrische Aufprallflagsignal (A1) gesetzt wird, wenn das erste Kriterium (K1) und/oder das zweite Kriterium (K2) erfüllt sind, und sonst das asymmetrische Aufprallflagsignal (A1) deaktiviert wird.

8. Verfahren nach Anspruch 7, **dadurch gekennzeichnet, dass** nach dem Setzen des asymmetrischen Aufprallflagsignals (A1) zur Bestimmung einer Aufprallseite das Vorzeichen der zweiten Verknüpfung (S1-S2) der erfassten oder aufbereiteten Sensordaten bestimmt wird.

9. Verfahren nach einem der Ansprüche 1 bis 8, **dadurch gekennzeichnet, dass** bei der Auswertung der erfassten Sensordaten (S1, S2) ein Korrekturfaktor berechnet und berücksichtigt wird, um baulich bedingte asymmetrische Fahrzeugstrukturen auszugleichen.

10. Verfahren nach einem der Ansprüche 1 bis 9, **dadurch gekennzeichnet, dass** zur Abschätzung der Crashschwere überprüft wird, ob das asymmetrische Aufprallflagsignal (A1) innerhalb einer vorgegebenen Zeitspanne (TI3) aktiviert wird.

11. Vorrichtung zur Crashtyperkennung für ein Fahrzeug, insbesondere zur Durchführung des Verfahrens nach einem der Ansprüche 1 bis 10, mit mindestens einer in Fahrrichtung links von der Fahrzeuglängsachse angeordneten Sensoreinheit (4), mit mindestens einer in Fahrrichtung rechts von der Fahrzeuglängsachse angeordneten Sensoreinheit (6), welche Sensordaten (S1, S2) erfassen, und einer Auswerte- und Steuereinheit (2), welche die erfassten Sensordaten (S1, S2) auswertet, wobei die Auswerte- und Steuereinheit (2) nach einem Aufprall die erfassten Sensordaten (S1, S2) miteinander verknüpft, **dadurch gekennzeichnet, dass** die Auswerte- und Steuereinheit (2) mindestes eine erste Verknüpfung (S1+S2) der erfassten Sensordaten (S1, S2) auf Erfüllen eines Stabilitätskriteriums überprüft und mindestens eine zweite Verknüpfung (S1-S2, |S1-S2|) der erfassten Sensordaten (S1, S2) mit einem vorgegebenen Schwellwert (SW2) dann vergleicht, wenn das Stabilitätskriterium erfüllt wird, wobei die Auswerte- und Steuereinheit (2) ein erstes Kriterium (K1) für ein asymmetrisches Aufprallflagsignal (A1) erkennt, wenn die zweite Verknüpfung (S1-S2, |S1-S2|) der erfassten Sensordaten (S1, S2) den vorgegebenen Schwellwert (SW2) überschreitet und/oder unterschreitet.

12. Vorrichtung nach Anspruch 11, **gekennzeichnet durch** eine zentral im Fahrzeug angeordnete Sensoreinheit (8), welche eine Geschwindigkeitsabnahme des Fahrzeugs erfasst, wobei die Auswerte- und Steuereinheit (2) ein zweites Kriterium (K2) für ein asymmetrisches Aufprallflagsignal (A1) erkennt, wenn die zweite Verknüpfung (S1-S2, |S1-S2|) der erfassten oder aufbereiteten Sensordaten (S1, S2) innerhalb einer vorgebbaren Zeitspanne einen zweiten vorgegebenen Schwellwert überschreitet und/oder unterschreitet und die zentral erfasste Geschwindigkeitsabnahme einen vorgegebenen dritten Schwellwert unterschreitet und/oder überschreitet.

13. Vorrichtung nach Anspruch 12, **dadurch gekennzeichnet, dass** die Auswerte- und Steuereinheit (2) das asymmetrische Aufprallflagsignal setzt, wenn das erste Kriterium (K1) und/oder das zweite Kriterium (K2) erfüllt sind, und sonst das asymmetrische Aufprallflagsignal (A1) deaktiviert.

## Claims

1. Method for crash type identification for a vehicle, in which at least two sensor units (4, 6) are used to capture and evaluate sensor data (S1, S2) from the lefthand vehicle side and from the right-hand vehicle side, wherein the sensor data (S1, S2) captured following an impact are combined with one another, **characterized in that** at least one first combination (S1+S2) of the captured sensor data (S1, S2) is checked as to whether at least one stability criterion is met, and at least one second combination (S1-S2, |S1-S2|) of the captured sensor data (S1, S2) is compared with a predefined threshold value (SW2) if the at least one stability criterion is met, wherein a first criterion (K1) for an asymmetric impact flag signal (A1) is identified if the second combination (S1-S2, |S1-S2|) of the captured sensor data (S1, S2) exceeds and/or falls below the predefined threshold value (SW2).

2. Method according to Claim 1, **characterized in that** the captured sensor data (S1, S2) are prepared prior to a combination procedure, preferably through a single or dual integration.

3. Method according to Claim 1 or 2, **characterized in that**, for the first combination (S1+S2), the sum of the captured or prepared sensor data (S1, S2) is calculated.

4. Method according to one of Claims 1 to 3, **characterized in that**, for the second combination (S1-S2, |S1-S2|), the difference and/or the absolute value of the difference between the captured or prepared sensor data (S1, S2) are/is calculated.

5. Method according to Claim 4, **characterized in that** the second combination (S1-S2, |S1-S2|) of the captured or prepared sensor data (S1, S2), prior to the comparison with the predefined threshold value (SW2), is standardized to the first combination (S1+S2) of the captured or prepared sensor data (S1, S2).

6. Method according to one of Claims 1 to 5, **characterized in that** a second criterion (K2) for the asymmetric impact flag signal (A1) is identified if the second combination (S1-S2, |S1-S2|) of the captured or prepared sensor data (S1, S2) exceeds and/or falls below a second predefined threshold value within a predefinable time interval and a centrally captured speed reduction falls below and/or exceeds a predefined third threshold value.

7. Method according to Claim 6, **characterized in that** the asymmetric impact flag signal (A1) is set when the first criterion (K1) and/or the second criterion (K2) are/is met, and the asymmetric impact flag signal (A1) is otherwise deactivated.

8. Method according to Claim 7, **characterized in that**, following setting of the asymmetric impact flag signal (A1), the sign of the second combination (S1-S2) of the captured or prepared sensor data is determined in order to determine an impact side.

9. Method according to one of Claims 1 to 8, **characterized in that**, in the evaluation of the captured sensor data (S1, S2), a correction factor is calculated and taken into account in order to compensate construction-based asymmetric vehicle structures.

10. Method according to one of Claims 1 to 9, **characterized in that**, in order to estimate the crash severity, it is checked whether the asymmetric impact flag signal (A1) is activated within a predefined time interval (TI3).

11. Device for crash type identification for a vehicle, in particular for performing the method according to one of Claims 1 to 10, having at least one sensor unit (4) arranged to the left of the vehicle longitudinal axis in the direction of travel, having at least one sensor unit (6) arranged to the right of the vehicle longitudinal axis in the direction of travel, which sensor units capture sensor data (S1, S2), and an evaluation and control unit (2) that evaluates the captured sensor data (S1, S2), wherein the evaluation and control unit (2), following an impact, combines the captured sensor data (S1, S2) with one another, **characterized in that** the evaluation and control unit (2) checks at least one first combination (S1+S2) of the captured sensor data (S1, S2) as to whether a stability criterion is met, and compares at least one second combination (S1-S2, |S1-S2|) of the captured sensor data (S1, S2) with a predefined threshold value (SW2) if the stability criterion is met, wherein the evaluation and control unit (2) identifies a first criterion (K1) for an asymmetric impact flag signal (A1) if the second combination (S1-S2, |S1-S2|) of the captured sensor data (S1, S2) exceeds and/or falls below . the predefined threshold value (SW2).

12. Device according to Claim 11, **characterized by** a sensor unit (8) which is arranged centrally in the vehicle and which captures a speed reduction of the vehicle, wherein the evaluation and control unit (2) identifies a second criterion (K2) for an asymmetric impact flag signal (A1) if the second combination (S1-S2, |S1-S2|) of the captured or prepared sensor data (S1, S2) exceeds and/or falls below a second predefined threshold value within a predefinable time interval and the centrally captured speed reduction falls below and/or exceeds a predefined third threshold value.

13. Device according to Claim 12, **characterized in that** the evaluation and control unit (2) sets the asymmetric impact flag signal if the first criterion (K1) and/or the second criterion (K2) are/is met, and otherwise deactivates the asymmetric impact flag signal (A1).

## Revendications

1. Procédé de reconnaissance du type de collision pour un véhicule, avec lequel des données de capteur (S1, S2) du côté gauche du véhicule et du côté droit du véhicule sont acquises par le biais d'au moins deux unités de détection (4, 6) et interprétées, les données de capteur (S1, S2) acquises après un choc étant combinées entre elles, **caractérisé en ce qu'**au moins une première combinaison (S1 + S2) des données de capteur (S1, S2) acquises est soumise à un contrôle en vue de vérifier si au moins un critère de stabilité est rempli, et au moins une deuxième combinaison (S1 - S2, |S1 - S2|) des données de capteur (S1, S2) acquises est alors comparée avec une valeur de seuil (SW2) prédéfinie lorsque l'au moins un critère de stabilité est rempli, un premier critère (K1) pour un signal marqueur de choc asymétrique (A1) étant reconnu lorsque la deuxième combinaison (S1 - S2, |S1 - S2|) des données de capteur (S1, S2) acquises devient supérieure et/ou inférieure à la valeur de seuil (SW2) prédéfinie.

2. Procédé selon la revendication 1, **caractérisé en ce que** les données de capteur (S1, S2) acquises sont préparées avant un processus de combinaison, de préférence par une intégration unique ou double.

3. Procédé selon la revendication 1 ou 2, **caractérisé en ce que** pour la première combinaison (S1 + S2), la somme des données de capteur (S1, S2) acquises ou préparées est calculée.

4. Procédé selon l'une des revendications 1 à 3, **caractérisé en ce que** pour la deuxième combinaison (S1 - S2, |S1 - S2|), la différence et/ou la valeur de la différence des données de capteur (S1, S2) acquises ou préparées est calculée.

5. Procédé selon la revendication 4, **caractérisé en ce que** la deuxième combinaison (S1 - S2, |S1 - S2|) des données de capteur (S1, S2) acquises ou préparées est normalisée sur la première combinaison (S1 + S2) des données de capteur (S1, S2) acquises ou préparées avant la comparaison avec la valeur de seuil (SW2) prédéfinie.

6. Procédé selon l'une des revendications 1 à 5, **caractérisé en ce qu'**un deuxième critère (K2) pour le signal marqueur de choc asymétrique (A1) est reconnu lorsque la deuxième combinaison (S1 - S2, |S1 - S2|) des données de capteur (S1, S2) acquises ou préparées, au sein d'un intervalle de temps pouvant être prédéfini, devient supérieure et/ou inférieure à une deuxième valeur de seuil prédéfinie et une baisse de vitesse détectée de manière centralisée devient inférieure et/ou supérieure à une troisième valeur de seuil prédéfinie.

7. Procédé selon la revendication 6, **caractérisé en ce que** le signal marqueur de choc asymétrique (A1) est activé lorsque le premier critère (K1) et/ou le deuxième critère (K2) sont remplis, et sinon le signal marqueur de choc asymétrique (A1) est désactivé.

8. Procédé selon la revendication 7, **caractérisé en ce qu'**après l'activation du signal marqueur de choc asymétrique (A1), le signe de la deuxième combinaison (S1 - S2) des données de capteur acquises ou préparées est déterminé en vue de déterminer un côté du choc.

9. Procédé selon l'une des revendications 1 à 8, **caractérisé en ce que** lors de l'évaluation des données de capteur (S1, S2) acquises, un facteur de correction est calculé et pris en compte afin de compenser les structures de véhicule asymétriques du fait de la construction.

10. Procédé selon l'une des revendications 1 à 9, **caractérisé en ce que** l'estimation de la gravité de la collision est effectuée en vérifiant si le signal marqueur de choc asymétrique (A1) est activé au sein d'un intervalle de temps (TI3) prédéfini.

11. Dispositif de reconnaissance du type de collision pour un véhicule, notamment pour mettre en oeuvre le procédé selon l'une des revendications 1 à 10, comprenant au moins une unité de détection (4) disposée du côté gauche de l'axe longitudinal de véhicule dans le sens de la marche, comprenant au moins une unité de détection (6) disposée du côté droit de l'axe longitudinal de véhicule dans le sens de la marche, lesquelles acquièrent des données de capteur (S1, S2), et une unité d'interprétation et de commande (2) qui interprète les données de capteur (S1, S2) acquises, l'unité d'interprétation et de commande (2) combinant entre elles les données de capteur (S1, S2) acquises après un choc, **caractérisé en ce que** l'unité d'interprétation et de commande (2) contrôle au moins une première combinaison (S1 + S2) des données de capteur (S1, S2) acquises en vue de vérifier si au moins un critère de stabilité est rempli et compare alors au moins une deuxième combinaison (S1 - S2, |S1 - S2|) des données de capteur (S1, S2) acquises avec une valeur de seuil (SW2) prédéfinie lorsque le critère de stabilité est rempli, l'unité d'interprétation et de commande (2) reconnaissant un premier critère (K1) pour un signal marqueur de choc asymétrique (A1) lorsque la deuxième combinaison (S1 - S2, |S1 - S2|) des données de capteur (S1, S2) acquises devient supérieure et/ou inférieure à la valeur de seuil (SW2) prédéfinie.

12. Dispositif selon la revendication 11, **caractérisé par** une unité de détection (8) disposée de manière centrale dans le véhicule, laquelle détecte une baisse de vitesse du véhicule, l'unité d'interprétation et de commande (2) reconnaissant un deuxième critère (K2) pour un signal marqueur de choc asymétrique (A1) lorsque la deuxième combinaison (S1 - S2, |S1 - S2|) des données de capteur (S1, S2) acquises ou préparées, au sein d'un intervalle de temps pouvant être prédéfini, devient supérieure et/ou inférieure à une deuxième valeur de seuil prédéfinie et la baisse de vitesse détectée de manière centralisée devient inférieure et/ou supérieure à une troisième valeur de seuil prédéfinie.

13. Dispositif selon la revendication 12, **caractérisé en ce que** l'unité d'interprétation et de commande (2) active le signal marqueur de choc asymétrique lorsque le premier critère (K1) et/ou le deuxième critère (K2) sont remplis, et sinon désactive le signal marqueur de choc asymétrique (A1).
